# EUROPÄISCHE PATENTSCHRIFT

(11) **EP 1 228 918 B1**
(45) Veröffentlichungstag und Bekanntmachung des Hinweises auf die Patenterteilung: **25.06.2003**
(21) Anmeldenummer: 01129362.8
(22) Anmeldetag: 17.12.2001
(51) Int. Cl.: B60K 41/28

(54) **Verfahren zur Durchführung eines Schaltvorgangs in einem Antriebssystem**
Method of changing gear in a drive system
Procédé pour changement de vitesse dans un système de transmission

(30) Priorität: 26.01.2001 DE 10103598
(43) Veröffentlichungstag der Anmeldung: 07.08.2002
(73) Patentinhaber: ZF Sachs AG, 97424 Schweinfurt (DE)
(72) Erfinder: Stühler, Rainer, 97475 Zeil (DE); Iftiger, Jörk, Dipl.-Ing., 97525 Schwebheim (DE); Thein, Albert, Dipl.-Ing., 97437 Hassfurt (DE)
(74) Vertreter: Ruttensperger, Bernhard, Dipl.-Phys.

(56) Entgegenhaltungen:
- DE-A- 4 012 595
- DE-A- 19 726 567
- US-A- 4 648 290
- US-A- 5 427 215
- US-A- 5 688 205

## Beschreibung

Die vorliegende Erfindung betrifft ein Verfahren zur Durchführung eines Schaltvorgangs in einem Antriebssystem, welches Antriebssystem ein Antriebsaggregat umfasst, welches über eine automatisierte Kupplungsanordnung in Drehmomentübertragungsverbindung mit einer Eingangsseite einer Getriebeanordnung bringbar ist, gemäß dem Oberbegriff des Anspruchs 1.

Derartige Antriebssysteme, bei welchen zumindest die Kupplungsanordnung, im Allgemeinen jedoch auch die Getriebeanordnung automatisiert betrieben werden, d.h. dass diesen beiden Anordnungen jeweilige Stelleinrichtungen zugeordnet sind, die gemäß der Ansteuerung durch eine Ansteuervorrichtung jeweilige Betätigungsvorgänge vornehmen, besteht grundsätzlich das Problem, dass bei den durchzuführenden Schaltvorgängen insbesondere dann, wenn an der Getriebeeingangsseite vergleichsweise große Drehzahlsprünge auftreten, innerhalb der Getriebeanordnung vergleichsweise hohe Synchronisierarbeiten zu verrichten sind. Es muss nämlich die Getriebeeingangswelle beispielsweise bei Durchführung eines Abwärtsschaltvorgangs in vergleichsweise kurzer Zeit auf eine deutlich höhere Drehzahl gebracht werden. Je größer der Drehzahlsprung ist, desto länger dauert die Synchronisierphase, was zur Folge hat, dass die durchzuführenden Schaltvorgänge vergleichsweise lang sind bzw. bei sehr niedrigen Temperaturen nur unter Aufbringung sehr hoher Schaltkräfte, die ggf. durch eine Stelleinrichtung nicht mehr geliefert werden können, möglich wären. Neben der vergleichsweise langen Synchronisationszeit können im Getriebe Schaltgeräusche auftreten bzw. besteht die potentielle Gefahr eines übermäßigen Verschleißes bzw. eines für einen Fahrer unkomfortablen Schaltvorgangs.

Aus der DE 40 12 595 A1 ist ein Verfahren zur Durchführung eines Schaltvorgangs in einem Antriebssystem gemäß dem Oberbegriff des Anspruchs 1 bekannt. Bei diesem bekannten Verfahren wird durch ein Zwischenkuppeln bei Durchführung eines Gangschaltvorgangs dafür gesorgt, dass die Getriebeeingangsdrehzahl durch zwischenzeitliches Einrücken der Kupplungsanordnung auf eine Drehzahl gebracht wird, die der nach dem Einlegen der neuen Gangstufe zu erwartenden Drehzahl entspricht.

Es ist die Aufgabe der vorliegenden Erfindung, ein Verfahren zur Durchführung von Schaltvorgängen in einem Antriebssystem vorzusehen, mit welchem Schaltvorgänge schneller durchgeführt werden können.

Erfindungsgemäß wird diese Aufgabe durch das im Anspruch 1 angegebene Verfahren gelöst.

Bei der erfindungsgemäßen Vorgehensweise wird also im Bereich des Getriebes ausgenutzt, dass durch Eingriff in das Motormanagement bzw. entsprechende Ansteuerung des Antriebsaggregats dieses auf eine Drehzahl gebracht wird, welche unter Mitberücksichtigung verschiedener den Fahrzustand eines Fahrzeugs charakterisierender Parameter das Antriebsaggregat nach Durchführung des Schaltvorgangs haben soll. Durch das zwischenzeitliche Verstellen der Kupplungsanordnung in Richtung Einkuppelstellung, d.h. durch vorübergehendes Bringen der Kupplungsanordnung in einen Zustand, in welchen durch Drehmomentübertragung über diese die Getriebeeingangsseite letzendlich an das Antriebsaggregat angekoppelt werden kann, kann somit eine Veränderung der Drehzahl an der Getriebeeingangsseite erzwungen werden, die zumindest in gewissem Ausmaß mit der Veränderung der Drehzahl des Antriebsaggregats korrespondiert. Wird also beispielsweise bei Durchführung eines Abwärtsschaltvorgangs das Antriebsaggregat in Richtung einer höheren, nach Durchführung des Schaltvorgangs vorgesehenen Soll-Drehzahl verstellt, kann das Antriebsaggregat durch das vorübergehende Übertragen eines Drehmomentes über die Kupplungsanordnung die Getriebeeingangsseite, also beispielsweise eine Getriebeeingangswelle, in dieser Richtung mitnehmen, so dass auch die Getriebeeingangsseite schneller und ggf. auch ohne Belastung oder übermäßige Belastung einer in der Getriebeanordnung vorgesehenen Synchronisiervorrichtung o. dgl. in denjenigen Drehzahlbereich gebracht werden kann, welcher an der Getriebeeingangsseite nach Durchführung des Schaltvorgangs vorgegeben bzw. vorzusehen ist. Da die Kupplungsanordnung nur vorübergehend weiter in Richtung Einkuppeln verstellt ist bzw. verstellt wird und zum Einlegen der neu zu aktivierenden Gangstufe jedoch vorübergehend wieder in Richtung Auskuppeln verstellt ist bzw. verstellt wird, kann diese neu zu aktivierende Gangstufe letztendlich ohne Erzeugung eines Schalt- oder Synchronisierstoßes eingelegt werden. Daraus resultiert trotz der vergleichsweise schnellen Veränderung der Drehzahl an der Getriebeeingangsseite auf die Ziel-Drehzahl ein sehr komfortabler Schaltvorgang, da letztendlich das Einlegen der neu zu aktivierenden Gangstufe in einem Zustand vorgenommen werden kann, in welchem zumindest im Bereich der Getriebeanordnung der Antriebsstrang nahezu momentenfrei ist.

Insbesondere dann, wenn - beispielsweise auch bedingt durch die Bauart des Antriebsaggregats - dieses sehr schnell auf die Soll-Drehzahl gebracht werden kann, kann vorgesehen sein, dass der Schritt d) dann durchgeführt wird, wenn die Drehzahl des Antriebsaggregats im Bereich der Soll-Drehzahl ist. Alternativ ist es jedoch auch möglich, dass der Schritt d) dann durchgeführt wird, wenn die Drehzahl des Antriebsaggregats eine vorbestimmte Differenz zur Drehzahl an der Getriebeeingangsseite aufweist. Dies bedeutet letztendlich, dass bereits während der Phase, während der das Antriebsaggregat seine Drehzahl noch ändert, bereits ein Mitnahmeeffekt erzeugt wird, so dass ggf. der gesamte Synchronisiervorgang, welcher letztendlich über die Kupplungsanordnung abläuft, in seiner Zeitdauer noch weiter verkürzt werden kann.

Da nach Durchführung eines Schaltvorgangs die Drehzahl an der Getriebeeingangsseite im Wesentlichen der Drehzahl des Antriebsaggregats entspricht, ist es vorteilhaft, durch die erfindungsgemäße Mitnahme der Getriebeeingangsseite über die Kupplungsanordnung dafür zu sorgen, dass am Ende der Synchronisierphase letztendlich diese Drehzahlgleichzeit hergestellt ist. Dies kann beispielsweise dadurch erfolgen, dass die Ziel-Drehzahl an der Getriebeeingangsseite der Soll-Drehzahl entspricht.

Um, wie bereits vorangehend angesprochen, den Vorgang des Einlegens der neu zu aktivierenden Gangstufe mit großem Komfort und für den Fahrer eines Fahrzeugs nahezu unspürbar durchführen zu können und dabei auch die verschiedenen Komponenten in der Getriebeanordnung so wenig als möglich zu belasten, wird vorgeschlagen, dass im Schritt e) die Kupplungsanordnung in eine Stellung gebracht wird, in welcher im Wesentlichen kein Drehmoment über diese übertragen werden kann. Weiter ist es dabei vorteilhaft, wenn während des Schrittes f), vorzugsweise auch während des Schrittes e), das Antriebsaggregat in einem Betriebszustand ist, in welchem ein von diesem abgegebenes Antriebsdrehmoment im Bereich von 0 Nm ist. Auf diese Art und Weise kann sichergestellt werden, dass beispielsweise auch in dem Falle, dass, bedingt durch irgendwelche Regelungenauigkeiten beim Verstellen der Kupplung in Richtung Auskuppelstellung, diese noch in einem Zustand verbleibt, in welchem sie zumindest ein geringes Drehmoment übertragen kann, im Wesentlichen ohne am Antriebsstrang anliegendem Drehmoment die neu zu aktivierende Gangstufe eingelegt werden kann.

Bei der erfindungsgemäßen Vorgehensweise kann ferner vorgesehen sein, dass nach dem Schritt f) die Kupplungsanordnung in Richtung Einkuppeln verstellt wird und das Antriebsaggregat in einen Drehmomentenabgabe-Betriebszustand gebracht wird.

Wie bereits ausgeführt ist, ist die erfindungsgemäße Vorgehensweise besonders dann effektiv, wenn der durchzuführende Schaltvorgang ein Abwärtsschaltvorgang ist.

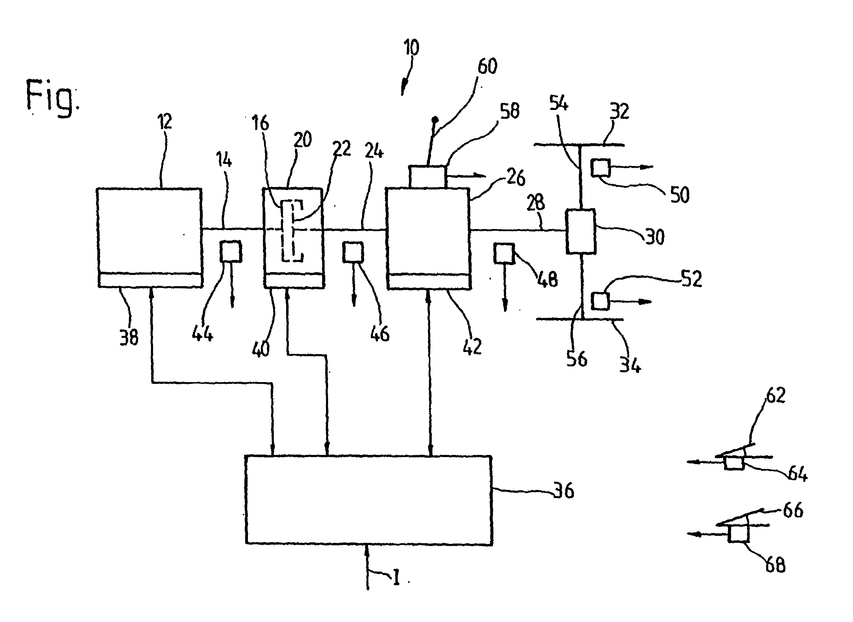

Zunächst wird mit Bezug auf die Figur allgemein ein Antriebssystem beschrieben, bei welchem das erfindungsgemäße Konzept angewandt werden kann.

Das Antriebssystem 10 umfasst ein Antriebsaggregat 12, beispielsweise eine Brennkraftmaschine 12, das über eine Antriebswelle 14 mit einer Eingangsseite 16 einer automatisierten Kupplungsanordnung 20, beispielsweise Reibungskupplung, in Verbindung steht. Eine Ausgangsseite 22 der Kupplungsanordnung 20 steht über eine Getriebeeingangswelle 24 in Antriebsverbindung mit einer automatisierten Getriebeanordnung 26. Deren Ausgangswelle 28 treibt über ein Differenzial 30 angetriebene Räder 32, 34 an. Das Antriebsaggregat 12, die Kupplungsanordnung 20 und die Getriebeanordnung 26 stehen unter der Ansteuerung einer Ansteuervorrichtung 36. Diese Ansteuervorrichtung 36 steht im Datentaustausch mit einer Leistungsstellanordnung 38 des Antriebsaggregats, um durch die Zuleitung von Ansteuersignalen oder Befehlen zur Leistungsstellanordnung 38 die Leistungsabgabe bzw. die Drehzahl des Antriebsaggregats 12 zu steuern bzw. zu regeln. Es sei darauf verwiesen, dass die Leistungsstellanordnung 38 jeglichen Bereich eines Antriebsaggregats umfasst, in welchem ein Einfluss auf dessen Drehzahl bzw. Leistungsabgabe genommen werden kann, beispielsweise das Einspritzsystem, das Drosselsystem, das Zündsystem, das Nockensystem usw. Selbstverständlich liefert die Leistungsstellanordnung 38 Information an die Ansteuervorrichtung 36, welche den Leistungsstellzustand des Antriebsaggregats 12 bezeichnet.

Ferner steht die Ansteuervorrichtung 36 mit einer Stellgliedanordnung 40 der automatisierten Kupplungsanordnung 20 in Verbindung, um durch Zufuhr entsprechender Stellsignale zu dieser die Kupplungsanordnung 20 zwischen einer eingerückten und einer ausgerückten Kupplungsstellung zu verstellen. Auch die Stellgliedanordnung 40 kann zur Ansteuervorrichtung 36 Information liefern, welche den momentanen Stellzustand der Kupplungsanordnung bezeichnet.

Weiter liefert die Ansteuervorrichtung 36 Ansteuersignale zur einer Stellgliedanordnung 42 der Getriebeanordnung 26. Diese Ansteuersignale führen zur Durchführung von Schaltvorgängen innerhalb der Getriebeanordnung 26. Auch hier wird der Ansteuervorrichtung 36 wieder Information rückgeliefert, welche den momentanen Stellzustand der Getriebeanordnung 26 bezeichnet. Die Ansteuervorrichtung 36 erhält weiter Information I von verschiedenen Sensoren, beruhend auf welcher Information die Ansteuervorrichtung 36 den Gesamtbetriebszustand des Fahrzeugs ermitteln kann. So ist beispielsweise ein Drehzahlsensor 44 vorgesehen, welcher die Drehzahl der Antriebswelle 14 erfasst. Es sei darauf verwiesen, dass; sofern hier von der Erfassung der Drehzahl die Rede ist, dies selbstverständlich auch die Erfassung jeglicher die Drehzahl charakterisierender Information umfasst, die dann beispielsweise in der Ansteuervorrichtung 36 zur tatsächlichen Ermittlung der Drehzahl an sich verarbeitet wird. Ferner ist ein Drehzahlsensor 46 vorgesehen, welcher die Drehzahl der Getriebeeingangswelle 24 erfasst, sowie ein Drehzahlsensor 48, welcher die Drehzahl der Getriebeausgangswelle 28 erfasst. Weiter sind Drehzahlsensoren 50, 52 vorgesehen, welche die Drehzahl der angetriebenen Räder 32, 34 bzw. von diese antreibenden Wellen 54, 56 erfassen. Beruhend auf diesen beiden Sensorausgaben bzw. beruhend auf der Ausgabe des Drehzahlsensors 48 kann die Fahrzeuggeschwindigkeit errechnet werden; d.h. diese Sensorausgaben der Sensoren 48, 50, 52 beinhalten Information über die Fahrzeuggeschwindigkeit.

Weiter ist ein Schaltsensor 58 vorgesehen, welcher eine Betätigung eines Schalthebels 60 erfasst und entsprechende Information I zur Ansteuervorrichtung 36 liefert. Beruhend auf dieser Information erkennt die Ansteuervorrichtung 36, welchen Schaltvorgang ein Fahrer durchführen will und erzeugt dann zum geeigneten Zeitpunkt und gegebenenfalls unter Berücksichtigung der weiteren den Fahrzustand repräsentierenden Information einen geeigneten Ansteuerbefehl für die Getriebeanordnung 26. Es sei darauf hingewiesen, dass an Stelle der Erfassung der Schalthebelbetätigung die Durchführung eines Schaltvorgangs auch nach Art eines Automatikgetriebes beruhend auf der Fahrsituation erfolgen kann.

Bei dem Antriebssystem 10 ist ferner ein Gas- oder Fahrpedal 62 mit einem zugeordneten Fahrpedalsensor 64 vorgesehen, dessen Ausgangssignal das Betätigungsausmaß des Fahrpedals repräsentiert. Weiter ist ein Bremspedal 66 vorgesehen, dem ebenfalls ein Sensor 68 zugeordnet ist. Das Ausgangssignal dieses Bremspedalsensors 68 repräsentiert das Betätigungsausmaß des Bremspedals 66.

Beruhend auf all diesen Sensoreingaben und möglicherweise noch weiteren Sen soreingaben, beispielsweise von einem Umgebungstemperatursensor, einem Kühlmitteltemperatursensor, einem Gierbewegungssensor und dergleichen, erzeugtdie Ansteuervorrichtung 36 verschiedene Ansteuerbefehle oder Ansteuervorgaben, welche dann in den verschiedenen anzusteuernden Aggregaten oder Komponenten, also der Leistungsstellanordnung 38, der Stellgliedanordnung 40 und der Stellgliedanordnung 42 umgesetzt werden, d.h. zur Durchführung von Stellvorgängen im Antriebsaggregat 12, in der Kupplungsanordnung 20 bzw. in der Getriebeanordnung 26 führen. Diese Ansteuervorgaben werden in der Ansteuervorrichtung 36 in einem Prozessor ermittelt, in welchem ein entsprechendes Steuerprogramm abläuft, das als Eingabe die verschiedenen Sensoreingaben I empfängt und das als Ausgabe eine Ansteuervorgabe erzeugt, die entweder als Ansteuerbefehl direkt zu den verschiedenen Stellbereichen 38, 40, 42 geleitet wird, oder die nachfolgend noch in der Ansteuervorrichtung 36 in einen jeweiligen Ansteuerbefehl umgesetzt und dann erst zu den Stellbereichen geleitet wird.

Wird bei einem Antriebssystem 10, wie es in der Figur dargestellt ist, entweder durch entsprechende Betätigung des Schalthebels 60 oder durch Auslesung eines Kennfeldes ein Schaltbefehl erzeugt, so kann zur Durchführung eines entsprechenden Schaltvorganges unter Ausnutzung der Prinzipien der vorliegenden Erfindung wie folgt vorgegangen werden:

Es sei beispielsweise unterstellt, dass der durchzuführende Schaltvorgang ein Schalten vom zweiten Gang in den ersten Gang ist. Dies bedeutet, dass nach Durchführung dieses Schaltvorgangs, d.h. dann, wenn der erste Gang eingelegt ist, vorausgesetzt dass die Fahrgeschwindigkeit des Fahrzeugs sich während des Schaltvorgangs nicht wesentlich ändert, an der Eingangsseite der Getriebeanordnung 26, d.h. im Bereich der Getriebeeingangswelle 24, hinsichtlich des Zustandes vor Durchführung dieses Schaltvorgangs eine deutlich höhere Drehzahl vorhanden sein muss. Entsprechendes gilt auch für das Antriebsaggregat 12 bzw. dessen Antriebswelle 14. Dies bedeutet letztendlich, dass sowohl die Getriebeeingangswelle 24 als auch die Antriebswelle 14 des Antriebsaggregats 12 auf diese neue Drehzahl gebracht werden müssen, und zwar in möglichst kurzer Zeit, um die für die Durchführung eines Schaltvorgangs erforderliche Zeitdauer so weit als möglich zu begrenzen. Die Durchführung eines Schaltvorgangs bedeutet letztendlich, dass in der Getriebeanordnung 26 eine vor Erzeugung des Schaltbefehls aktivierte Gangstufe ausgelegt werden muss, wozu beispielsweise dann, wenn in der Getriebeanordnung herkömmliche Synchronisiereinrichtungen eingesetzt werden, eine Schaltmuffe verschoben wird. Das Einlegen einer neu zu aktivierenden Gangstufe, also im angenommenen Beispiel des ersten Gangs, bedeutet in entsprechender Weise die Verschiebung einer Schaltmuffe, wobei hierfür - bezogen auf den Vorgang des Auslegens einer Gangstufe - eine deutlich längere Zeitdauer erforderlich ist, um die Drehzahlsynchronisation der vermittels der Synchronisiereinrichtung drehfest miteinander zu koppelnden Bauglieder zu erlangen.

Gemäß der vorliegenden Erfindung wird also dann, wenn ein Schaltbefehl erzeugt worden ist, zunächst die zuvor eingelegte Gangstufe, also beispielsweise der zweite Gang, ausgelegt. Dies wird dadurch erreicht, dass die Kupplungsanordnung 20 bzw. die Stellgliedanordnung 40 derselben durch die Ansteuervorrichtung 36 derart angesteuert wird, dass die Kupplungsanordnung 20 in Richtung Ausrücken verstellt wird. Dies kann bedeuten, dass die Eingangsseite 16 und die Ausgangsseite 22 der Kupplungsanordnung 20 drehmomentenübertragungsmäßig vollständig voneinander entkoppelt werden, oder aber dass die Verstellung in Richtung Auskuppeln nur so weit vorgenommen wird, dass eine deutliche Absenkung des über die Kupplungsanordnung 20 übertragbaren Momentes erzielt wird. Dieses Senken des über die Kupplung maximal übertragbaren Drehmoments führt letztendlich dazu, dass das an der Getriebeeingangswelle 24 anliegende Drehmoment entsprechend gemindert wird mit der Folge, dass dann, wenn eine innerhalb der Getriebeanordnung 26 durch entsprechende Ansteuerung der Stellgliedanordnung 42 derselben bereits aufgebaute Schaltkraft ausreicht, beispielsweise eine Schaltmuffe zum Auslegen eines Ganges zu verschieben, dieses Auslegen der zunächst nach aktivierten Gangstufe, also beispielsweise der zweiten Gangstufe, auch auftritt. Einhergehend mit der Verstellung der Kupplungsanordnung 20 in Richtung Auskuppeln oder dann, wenn das über diese Kupplungsanordnung 20 maximal übertragbare Drehmoment auf einen bestimmten Wert reduziert worden ist, oder dann, wenn die zuvor aktivierte Gangstufe ausgelegt worden ist, wird vermittels der Ansteuervorrichtung 36 die Leistungsstellanordnung 38 des Antriebsaggregats 12 derart angesteuert, dass das Antriebsaggregat 12 seine Drehzahl bzw. die Drehzahl seiner Antriebswelle 14 verändert, und zwar in einem derartigen Sinne, dass eine Annäherung an eine für den vorzunehmenderi Schaltvorgang vorgegebene Soll-Drehzahl stattfindet. Diese Soll-Drehzahl ist selbstverständlich bestimmt durch verschiedene Parameter, wie z.B. die momentane Fahrgeschwindigkeit und den durchzuführenden Schaltvorgang. Durch das Verändern der Drehzahl des Antriebsaggregats 12 bzw. der Antriebswelle 14 desselben in Richtung der Soll-Drehzahl, welche für den Zustand nach Durchführung des SchaltVorgangs vorgegeben ist, wird erreicht, dass die Zeitdauer für den Schaltvorgang begrenzt werden kann bzw. dass am Ende des Schaltvorgangs bei dem dann vorzunehmenden Einkuppelvorgang in der Kupplungsanordnung 20 im Wesentlichen stoßfrei eingekuppelt werden kann.

Um in der Getriebeanordnung 26 so schnell als möglich die für die Eingangsseite derselben, d.h. die Getriebeeingangswelle 24, nach Durchführung des Schaltvorgangs vorzusehende Drehzahl zu erreichen, wird gemäß der vorliegenden Erfindung dann, wenn die vor Durchführung des Schaltvorgangs aktivierte Gangstufe ausgelegt worden ist, die Kupplungsanordnung 20, deren maximal übertragbares Drehmoment zuvor durch Verstellen in Richtung Auskuppeln gemindert worden ist, wieder in Richtung Einkuppeln verstellt, und zwar zumindest so weit, dass zwischen Antriebswelle 14 und Getriebeeingangswelle 24 eine Drehmomentübertragungskopplung hergestellt wird, die ausreicht, um zusammen mit der Drehzahl der Antriebswelle 14 auch die Drehzahl der Getriebeeingangswelle 24 zu verändern. Dies bedeutet letztendlich für den Fall des angenommenen Abwärtsschaltvorgangs vom zweiten Gang in den ersten Gang, dass beim Hochdrehen des Antriebsaggregats 12 und der entsprechenden Zunahme der Drehzahl der Antriebswelle 14 über die Kupplungsanordnung 20 nunmehr auf die Getriebeeingangswelle 24 ein Antriebsdrehmoment übertragen wird, um auch deren Drehzahl entsprechend zu erhöhen. Dieses Erhöhen der Drehzahl der Getriebeeingangswelle muss bei herkömmlichen Getrieben, welche beispielsweise Synchronisiereinrichtungen verwenden, alleine durch die in der Synchronisiereinrichtung zur Synchronisation in Wechselwirkung tretenden Baugliedern übernommen werden. Durch die vorliegende Erfindung kann diese Arbeit jedoch zumindest teilweise, vorzugsweise vollständig, durch die Kupplungsanordnung 20 bewerkstelligt werden mit der Folge, dass die Synchronisiereinrichtung deutlich weniger belastet wird.

Das Ausnutzen der Veränderung der Drehzahl des Antriebsaggregats 12 zum entsprechenden Verändern der Drehzahl der Getriebeeingangswelle 24 kann beispielsweise derart erfolgen, dass dann, wenn im Bereich des Antriebsaggregats 12 bzw. der Antriebswelle 14 die Soll-Drehzahl erreicht ist, das angesprochene Verstellen der Kupplungsanordnung 20 in Richtung Einkuppelstellung vorgenommen wird. Alternativ ist es jedoch auch möglich, dieses Verstellen der Kupplungsanordnung 20 bereits dann beginnen zu lassen, wenn die Drehzahl der Antriebswelle 14, welche vor Durchführung des Schaltvorgangs bei vollständig eingerückter Kupplungsanordnung 20 der Drehzahl der Getriebeeingangswelle 24 entsprochen hat, durch Ansteuerung der Leistungsstellanordnung 38 sich in einem bestimmten Ausmaß von der Drehzahl der Getriebeeingangswelle 24 wegbewegt hat, d.h. dass zwischen der Drehzahl der Getriebeeingangswelle 24 und der Drehzahl der Antriebswelle 14 eine bestimmte Differenz entstanden ist. Der Vorteil dieser Vorgehensweise ist, dass bereits während der Veränderung der Drehzahl der Antriebswelle 14 die Synchronisationsphase durch entsprechendes Verändern der Drehzahl der Getriebeeingangswelle 24 eingeleitet wird und damit nicht abgewartet wird, bis die Antriebswelle 14 ihre Soll-Drehzahl erreicht hat oder sich diese Soll-Drehzahl angenähert hat.

Liegt dann die Drehzahl der Getriebeeingangswelle 24 im Bereich einer für einen Schaltvorgang vorgegebenen Ziel-Drehzahl, welche im Allgemeinen der für das Antriebsaggregat 12 vorgegebenen Soll-Drehzahl entspricht, wird gemäß der vorliegenden Erfindung die Kupplungsanordnung 20 bzw. die Stellgliedanordnung 40 derselben wieder derart angesteuert, dass die Kupplungsanordnung 20 in Richtung Auskuppeln verstellt wird und somit das über diese maximal übertragbare Drehmoment absinkt. Um ein möglichst komfortables Einlegen der neu zu aktivierenden Gangstufe, also im angenommenen Beispiel der ersten Gangstufe, erhalten zu können, wird vorzugsweise die Kupplungsanordnung 20 so weit in Richtung Auskuppeln verstellt, bis ein sogenannter Schleifpunkt überschritten wird und über die Kupplungsanordnung 20 kein Drehmoment mehr übertragen werden kann. Da bedingt durch Erfassungsungenauigkeiten der aktuellen Betätigungsstellung der Kupplungsanordnung 20 oder bedingt durch Regelschwankungen in einem Zustand, in welchem angenommen wird, dass diese bereits über den Schleifpunkt hinweg in Richtung Auskuppeln verstellt worden ist, tatsächlich noch zumindest ein geringes Drehmoment über die Kupplungsanordnung 20 übertragen werden kann, ist es vorteilhaft, zum nachfolgenden Einlegen der neu zu aktivierenden Gangstufe auch das vom Antriebsaggregat 12 abgegebene Antriebsdrehmoment auf einen Wert im Bereich von 0 Nm zu senken, so dass selbst bei noch ein geringes Drehmoment übertragender Kupplungsanordnung 20 der gesamte Antriebsstrang im Wesentlichen momentenfrei ist. In diesem Zustand wird dann vermittels entsprechender Ansteuerung der Stellgliedanordnung 42 der Getriebeanordnung 26 die neu zu aktivierende Gangstufe eingelegt, wobei aufgrund der bereits erlangten Synchronisation und aufgrund der Tatsache, dass an der Getriebeeingangswelle 24 im Wesentlichen kein Antriebsmoment mehr anliegt, dieses Einlegen der neu zu aktivierenden Gangstufe in sehr kurzer Zeit und im Wesentlichen ohne die Erzeugung irgendwelcher Schaltstöße oder Schaltgeräusche erfolgen kann.

Ist die neu zu aktivierende Gangstufe beispielsweise durch vollständiges oder nahezu vollständiges Verschieben einer Schaltmuffe in einer Synchronisiereinrichtung dann eingelegt, kann die Kupplungsanordnung 20 durch entsprechende Ansteuerung der Stellgliedanordnung 40 derselben wieder in Richtung Einkuppeln verstellt werden und es kann das Antriebsaggregat 12 durch entsprechende Ansteuerung der Leistungsstellanordnung 38 in einen Zustand gebracht werden, welcher dem momentanen Fahrzustand eines Fahrzeugs, beispielsweise wiedergegeben durch das Ausmaß der Betätigung des Gaspedals 62, entspricht.

Durch die erfindungsgemäße Vorgehensweise bei Durchführung eines Schaltvorgangs kann durch das Ausnutzen eines vorübergehend über die Kupplungsanordnung auf die Getriebeeingangsseite übertragbaren Momentes die in der Getriebeanordnung erforderliche Synchronisationsphase deutlich verkürzt werden. Neben der Verkürzung dieser Synchronisationsphase und der damit selbstverständlich einhergehenden Verkürzung des gesamten Schaltvorgangs kann die Belastung der in den Schaltvorgang involvierten Baugruppen, insbesondere von in der Getriebeanordnung vorgesehenen Einrichtungen oder Organen, mit welchen die Drehzahlen zweier miteinander zu koppelnder Komponenten einander angeglichen werden können, also beispielsweise Synchronisiereinrichtungen herkömmlicher Bauart, deutlich vermindert werden.

Es ist selbstverständlich, dass bei Durchführung der erfindungsgemäßen Vorgehensweise insbesondere die Ansteuerung der Kupplungsanordnung in an eine jeweilige Fahrsituation angepasster Art und Weise geändert werden. Soll eine besonders komfortable Fahrweise vorgesehen werden, so ist es vorteilhaft, in den verschiedenen Phasen die Kupplungsanordnung derart anzusteuern, dass sie im Wesentlichen kein Drehmoment mehr übertragen kann. Bei sportlicher Fahrweise ist es selbstverständlich möglich, das Ausrücken jeweils nur bis zu einem Zustand vorzunehmen, in welchem die dann an der Getriebeeingangswelle 24 noch anliegenden Momente die Durchführung der verschiedenen Maßnahmen, also beispielsweise das Auslegen einer Gangstufe oder das Einlegen einer Gangstufe, gestatten. Das nur teilweise Ausrücken der Kupplungsanordnung hat selbstverständlich eine weitere Verringerung der zur Durchführung eines Schaltvorgangs erforderlichen Zeitdauer zur Folge, wobei dann jedoch gegebenenfalls Komforteinbußen hingenommen werden müssen.

Es sei des Weiteren darauf hingewiesen, dass die erfindungsgemäße Vorgehensweise auch bei Schaltvorgängen vorgenommen werden kann, bei welchen die Drehzahl an der Getriebeeingangsseite vermindert werden muss, also bei Aufwärtsschaltvorgängen. Wenn bei derartigen Schaltvorgängen durch entsprechende Ansteuerung der Leistungsstellanordnung 38 die Drehzahl des Antriebsaggregats bzw. der Antriebswelle desselben sehr schnell vermindert werden kann, kann durch zumindest teilweises vorübergehendes Wiedereinrücken der Kupplungsanordnung ein entsprechendes Bremsmoment auf die Getriebeeingangswelle übertragen werden und somit auch deren Drehzahl unter Ausnutzung des vom Antriebsaggregat gelieferten und über die Kupplungsanordnung übertragenen Bremsmomentes gesenkt werden.

## Patentansprüche

1. Verfahren zur Durchführung eines Schaltvorgangs in einem Antriebssystem, welches Antriebssystem (10) ein Antriebsaggregat (12) umfasst, welches über eine automatisierte Kupplungsanordnung (20) in Drehmomentübertragungsverbindung mit einer Eingangsseite (24) einer Getriebeanordnung (26) bringbar ist, wobei das Verfahren die Schritte umfasst:
a) nach Erzeugung eines Schaltbefehls, Verstellen der Kupplungsanordnung (20) in Richtung Auskuppeln,
b) Auslegen einer vor Erzeugung des Schaltbefehls in der Getriebeanordnung (26) aktivierten Gangstufe,
c) Verändern einer Drehzahl des Antriebsaggregats (12) in Richtung einer Soll-Drehzahl,
d) Verstellen der Kupplungsanordnung (20) in Richtung Einkuppelstellung,
e) dann, wenn eine Drehzahl an der Getriebeeingangsseite (24) im Bereich einer Ziel-Drehzahl ist, Verstellen der Kupplungsanordnung (20) in Richtung Auskuppeln,
f) Einlegen einer in der Getriebeanordnung (26) gemäß dem Schaltbefehl zu aktivierenden Gangstufe,
**dadurch gekennzeichnet, dass** im Schritt d) die Kupplungsanordnung (20) so weit in Richtung Einkuppelstellung verstellt wird, bis das über die Kupplungsanordnung (20) übertragene Drehmoment ausreicht, die Drehzahl der Getriebeeingangsseite (24) entsprechend der Änderung der Drehzahl des Antriebsaggregats (12) zu verändern.

2. Verfahren nach Anspruch 1,
**dadurch gekennzeichnet, dass** der Schritt d) dann durchgeführt wird, wenn die Drehzahl des Antriebsaggregats (12) im Bereich der Soll-Drehzahl ist.

3. Verfahren nach Anspruch 1,
**dadurch gekennzeichnet, dass** der Schritt d) dann durchgeführt wird, wenn die Drehzahl des Antriebsaggregats (12) eine vorbestimmte Differenz zur Drehzahl an der Getriebeeingangsseite (24) aufweist.

4. Verfahren nach einem der Ansprüche 1 bis 3,
**dadurch gekennzeichnet, dass** die Ziel-Drehzahl an der Getriebeeingangsseite (24) der Soll-Drehzahl entspricht.

5. Verfahren nach einem der Ansprüche 1 bis 4,
**dadurch gekennzeichnet, dass** im Schritt e) die Kupplungsanordnung (20) in eine Stellung gebracht wird, in welcher im Wesentlichen kein Drehmoment über diese übertragen werden kann.

6. Verfahren nach einem der Ansprüche 1 bis 5,
**dadurch gekennzeichnet, dass** während des Schrittes f), vorzugsweise auch während des Schrittes e), das Antriebsäggregat (12) in einem Betriebszustand ist, in welchem ein von diesem abgegebenes Antriebsdrehmoment im Bereich von O Nm ist.

7. Verfahren nach einem der Ansprüche 1 bis 6,
**dadurch gekennzeichnet, dass** nach dem Schritt f) die Kupplungsanordnung (20) in Richtung Einkuppeln verstellt wird und das Antriebsaggregat (12) in einen Drehmomentenabgabe-Betriebszustand gebracht wird.

8. Verfahren nach einem der Ansprüche 1 bis 7,
**dadurch gekennzeichnet, dass** der Schaltvorgang ein Abwärtsschaltvorgang ist.

## Claims

1. Method for carrying out a gear shift in a drive system, which drive system (10) comprises a drive unit (12) which can be brought via an automated clutch arrangement (20) into torque transmission connection with one input side (24) of a transmission arrangement (26), the method comprising the steps:
a) after generating a shift command, adjusting the clutch arrangement (20) in the direction of declutching,
b) designing a gear stage activated in the transmission arrangement (26) prior to generation of the shift command,
c) changing a speed of the drive unit (12) in the direction of a desired speed,
d) adjusting the clutch arrangement (20) in the direction of the engagement position,
e) then, if a speed at the transmission input side (24) is in the range of a target speed, adjusting the clutch arrangement (20) in the direction of declutching,
f) engaging a gear stage to be activated in the transmission arrangement (26) in accordance with the shift command,
**characterised in that** in step d) the clutch arrangement (20) is adjusted in the direction of the engagement position until the torque transmitted via the clutch arrangement (20) is sufficient to change the speed of the transmission input side (24) in accordance with the change in speed of the drive unit (12).

2. Method according to claim 1, **characterised in that** step d) is carried out if the speed of the drive unit (12) is in the range of the desired speed.

3. Method according to claim 1, **characterised in that** step d) is carried out if the speed of the drive unit (12) exhibits a predetermined difference from the speed at the transmission input side (24).

4. Method according to any of claims 1 to 3, **characterised in that** the target speed at the transmission input side (24) corresponds to the desired speed.

5. Method according to any of claims 1 to 4, **characterised in that** in step e) the clutch arrangement (20) is brought into a position in which substantially no torque can be transmitted thereby.

6. Method according to any of claims 1 to 5, **characterised in that** during step f), preferably also during step e), the drive unit (12) is in an operating state in which a drive moment output thereby is in the range of 0 Nm.

7. Method according to any of claims 1 to 6, **characterised in that** after step f) the clutch arrangement (20) is adjusted in the direction of engagement and the drive unit (12) is brought into a torque output operating state.

8. Method according to any of claims 1 to 7, **characterised in that** the gear shift is a downward shift.

## Revendications

1. Procédé pour réaliser un changement de vitesse dans un système d'entraînement, lequel système d'entraînement (10) comprend un groupe d'entraînement (12) qui peut être amené, à travers un dispositif d'accouplement (20) automatisé, dans une liaison de transmission du couple de rotation avec un côté entrée (24) d'un dispositif de transmission (26), le procédé comprenant les étapes suivantes :
a) après production d'une instruction de commande, déplacement du dispositif d'accouplement (20) dans le sens du débrayage,
b) dimensionnement d'un cran de marche activé avant production de l'instruction de commande, dans le dispositif de transmission (26),
c) variation d'une vitesse de rotation du groupe d'entraînement (12) dans le sens d'une vitesse de rotation de consigne,
d) déplacement du dispositif d'accouplement (20) dans le sens d'une position d'embrayage,
e) lorsqu'une vitesse de rotation sur le côté entrée de la transmission (24) se trouve dans le domaine d'une vitesse de rotation visée, alors déplacement du dispositif d'accouplement (20) dans le sens du débrayage,
f) mise en place d'un cran de marche à activer dans le dispositif de transmission (26) selon l'instruction de commande,
**caractérisé en ce qu'**au cours de l'étape d) le dispositif d'accouplement (20) est déplacé dans le sens de la position d'embrayage jusqu'à ce que le couple de rotation transmis par le dispositif d'accouplement (20) suffise pour faire varier la vitesse de rotation du côté entrée de la transmission (24), conformément à la variation de la vitesse de rotation du groupe d'entraînement (12).

2. Procédé selon la revendication 1, **caractérisé en ce que** l'étape d) est exécutée lorsque la vitesse de rotation du groupe d'entraînement (12) se situe dans le domaine de la vitesse de rotation de consigne.

3. Procédé selon la revendication 1, **caractérisé en ce que** l'étape d) est exécutée lorsque la vitesse de rotation du groupe d'entraînement (12) présente une différence prédéterminée par rapport à la vitesse de rotation sur le côté entrée de la transmission (24).

4. Procédé selon l'une des revendications 1 à 3, **caractérisé en ce que** la vitesse de rotation visée correspond sur le côté entrée de la transmission (24) à la vitesse de rotation de consigne.

5. Procédé selon l'une des revendications 1 à 4, **caractérisé en ce qu'**au cours de l'étape e) le dispositif d'accouplement (1) est amené dans une position dans laquelle essentiellement aucun couple de rotation ne peut être transmis par celui-ci.

6. Procédé selon l'une des revendications 1 à 5, **caractérisé en ce que** pendant l'étape f), de préférence aussi pendant l'étape e), le groupe d'entraînement (12) se trouve dans un état de fonctionnement dans lequel un couple de rotation d'entraînement, fourni par celui-ci, est de l'ordre de 0 Nm.

7. Procédé selon l'une des revendications 1 à 6, **caractérisé en ce qu'**après l'étape f), le dispositif d'accouplement (20) est déplacé dans le sens de l'embrayage, et le groupe d'entraînement (12) est amené dans un état de fonctionnement de fourniture du couple de rotation.

8. Procédé selon l'une des revendications 1 à 7, **caractérisé en ce que** l'opération de changement de vitesse est une opération de rétrogradation.
